# EUROPEAN PATENT APPLICATION

(11) **EP 3 608 890 A1**
(43) Date of publication of application: **12.02.2020**
(21) Application number: 17904751.9
(22) Date of filing: 23.11.2017
(51) Int. Cl.: G08G 1/04, G08G 1/015, G08G 1/052

(54) **SYSTEM FOR AUTOMATIC DETECTION OF CATEGORIES OF VEHICLE BASED ON ANALYSIS OF THE IMAGE OF THE LONGITUDINAL PROFILE**

(30) Priority: 03.04.2017 BR 102017006860
(71) Applicant: Compsis Computadoras e Sistemas Ind. E Com. Ltda, 12231-090 São José dos Campos - SP (BR)
(72) Inventor: MICOSKI, Mauricio, San José dos Campos (BR); VANILSON DA COSTA SOUZA, Cledson, Suzano (BR)
(74) Representative: Lorente Berges, Ana
(86) International application number: PCT/BR2017/000140
(87) International publication number: WO 2018/184079

(57) **Abstract**

The present patent of invention refers to the field of automation engineering, more specifically to the automatic detection of classes of automotive vehicles by analyzing their profile images, with the object of developing an innovative system to count suspended axles and axles on the floor, and single or double wheel axles on the floor, of an automotive vehicle, thus determining its class to define fees at toll stations; by means of the system, a vehicle profile image is obtained by scanning performed by an optical beam curtain while the vehicle moves on the track.

## Description

### TECHNICAL FIELD OF THE INVENTION

The present patent of invention refers to the field of automation engineering, more specifically to the automatic detection of automotive vehicle classes by analyzing their profile images, with the object of developing an innovative system to count suspended axles and axles on the floor of an automotive vehicle, thus determining its class to define fees at toll stations. There are also other objects, such as to determine the length of the vehicle, measure its transit speed, distinguish cargo transport vehicles from public transportation vehicles for persons or also detect the existence of double wheel axles by complementary profile analysis.

The system makes use of the profile image of the vehicle, obtained by vertical scanning performed by an optical light beam curtain while the vehicles move on the track.

The invention presents the detection of the quantity of axles in an automotive vehicle, particularly suspended axles, with great accuracy and repeatability. The scanning and profile analysis process is highly precise and, in comparison with the current detection models with low accuracy, characterizes the improvement in the general quality of the fee collection process or others requiring vehicle classification.

The system offers stand-alone operation against other processes performed on toll tracks, and may be integrated to them by at least two distinct ways, and may also operate independently for audits.

The present system may also be used with slight design and/or configuration changes for detecting cargo in open railway carriages and counting wheels on railway carriages.

The present invention allows to eliminate a few devices as currently used for measurements. Electromechanical dry contact sensors, having high purchase and maintenance costs, are the main deleted elements. In substitution, an optical scanning barrier and a pair of optical sensors having relatively lower purchase cost and simplified maintenance, with lower cost, are used.

Therefore, we have, in the patent application at issue, a system which was especially designed and developed, with efficiency and perfection, so to offer easiness, quickness, safety and economy, bringing great advantages in its use. Besides allowing higher profitability to road toll concessionaires, considering that their loss caused by detection failure will be significantly minimized, and this greater precision will bring a reduction of manual treatments to correct wrongly detected classes and costs, they will be able to invest in quality and new road technologies.

It is also an object of the present application to present a system for automatic detection of vehicle classes by analyzing their profile image at low cost for industrial performance, but added to strength, safety and utility viability requirements, providing the consumer public with an additional option in the market of similar systems which, in comparison with those available in the current market, offers numerous possibilities and benefits to its users, thus becoming a widely accepted model in the market field.

### STATE OF THE ART

Facilities in public roads, such as paved roads, bridges and tunnels, in most cases have tolls, frequently representing a very important source of income for many states/provinces and towns.

The large number of cars, trucks, buses, motorcycles and other vehicles, stopping at toll stations to pay the charged fee may cause significant problems for that road. The installation of toll collecting stations, for example, significantly restricts the flow of traffic, causing traffic jams and forcing vehicles to suddenly change tracks, thus increasing the probability of accidents.

Many people may arrive late at their destinations of interest, and their vehicles also consume much more fuel when moving at low speed.

The environment may suffer high increase in pollution as the vehicles move at low speed, releasing pollutants, more specifically carbon dioxide and carbon monoxide, which present significant risks to drivers'/passengers' health, as well as for toll station operators.

With the technological progress, we can only find other solutions aiming to make road tolls become fully automated and independent, so to make the traffic flow naturally.

The profile design of the vehicle by imaging is available at a small scale in the market field, but their scanning time and the information obtained from them is not compatible with the transit speed of vehicles on automatic tracks.

Furthermore, by observing the usual processes for counting vehicle axles, particularly suspended axles, we notice that, by using small optical sensors, installed at a fixed height, the level of accuracy for detection does not reach toll concessionaries' requirements, causing high operational and financial trouble.

In a research performed with specialized data banks, documents concerning skills adopted to classify a vehicle or its trademark and model have been found, such as the document nº US 20050267657 - "METHOD FOR CLASSIFYING VEHICLES", a skill used to successively classify and identify vehicles by images, reducing their classification to manufacturer, model and other more specific characteristics. That process uses the position, size, color, shape and other characteristics of the image helping to distinguish vehicles from other kinds of objects in an image. An initial classification of the target vehicle is performed by classifying the vehicle according to a pre-determined set of characteristics which are common to various kinds of vehicles. A small list is then created with vehicle manufacturers and models in which the target vehicle could be potentially found. Visible characteristic features on the target vehicle are identified at a graphic mathematical model called wireframe, which is compared to a list of wireframe models containing the same characteristic features of the various manufacturers and models selected in the previous step.

The document nº US 5083200 - "METHOD FOR IDENTIFYING MOVING OBJECTS, PARTICULARLY VEHICLES, AND SYSTEMS FOR ITS PERFORMANCE" - has also been found, which is a method to identify a moving object, especially a vehicle, including various steps, whenever the object is moving within a pre-determined identification zone, following a pre-determined movement axis. The steps are the periodical acquisition of images of the object within the pre-determined field of vision, verifying the nature of the bottom of the image in the field of vision, so to obtain reference background information in the lack of the object and process the acquired images in combination with the background information of reference to extract an outline of the object, after it has crossed the field of vision. Systems have been disclosed for performing that method. The invention may be particularly used at road toll stations and for any other application requiring vehicle identification.

As we can see on the above mentioned documents, despite there are solutions allowing to detect the vehicle with use of an image, we have identified that all of them may suffer a high level of failure, with the risk of causing more problems than solutions to toll concessionaires.

As we can notice, the documents mentioned by the above paragraphs, despite referring to the same technical field, do not have any of the characteristics of the object as now improved, thus guaranteeing the fulfillment of the patentability requirements as legally established.

### BRIEF DISCLOSURE OF THE INVENTION

Considering technical and usage requirements to have an efficient system so to avoid the already mentioned inconvenience, the inventor, as a person related to the field with notorious knowledge of the sector, was led to create and develop the object of the present patent application, entitled **"SYSTEM FOR AUTOMATIC DETECTION OF VEHICLE CLASSES BY ANALYZING A LENGTHWISE PROFILE IMAGE",** devising a system which main purpose is to count the suspended axles and the axles on the floor of an automotive vehicle, by determining its class for defining toll charges, making use of a profile image of the vehicle, obtained by vertical scanning performed by an optical light beam curtain while the vehicle moves on the track.

This system not only takes into account functional and mechanical qualities, but the shape, arrangement and strategic location of its parts and components which, when correctly located, bring in an increase in efficiency at no cost to the users whatsoever.

Besides eliminating suspended axle sensors, the present invention also eliminates electromechanical sensors at high cost for acquisition and maintenance, using optical sensors at relatively lower cost and maintenance at extremely lower cost.

The system offers full stand-alone operation against the detection process on toll tracks, and may be integrated to them and also operate independently for audits.

It is also important to highlight that the present invention as now claimed may also be used to indicate the class of the vehicle, not only by counting its axles, but also by analyzing its profile, distinguishing passenger vehicles, buses, trucks, carriages and others, by analyzing the profile obtained by vertical scanning performed by an optical beam curtain while they move on the track.

It is also important to highlight that the present invention as claimed may also be used for detecting double wheel axles, not using conventional sensors for that purpose, by making use of the profile obtained by said vertical scanning performed by an optical beam curtain during its movement on the track.

It is also important to highlight that the present invention as now claimed may also be used with slight design and/or configuration changes for detecting cargo in open railway carriages and counting wheels on railway carriages.

It is also understandable that the construction of the system at issue is extremely simple, thus being easily performed in the industry, but reaching excellent practical and functional results, and offering an innovative solution. **DESCRIPTION OF THE DRAWINGS**

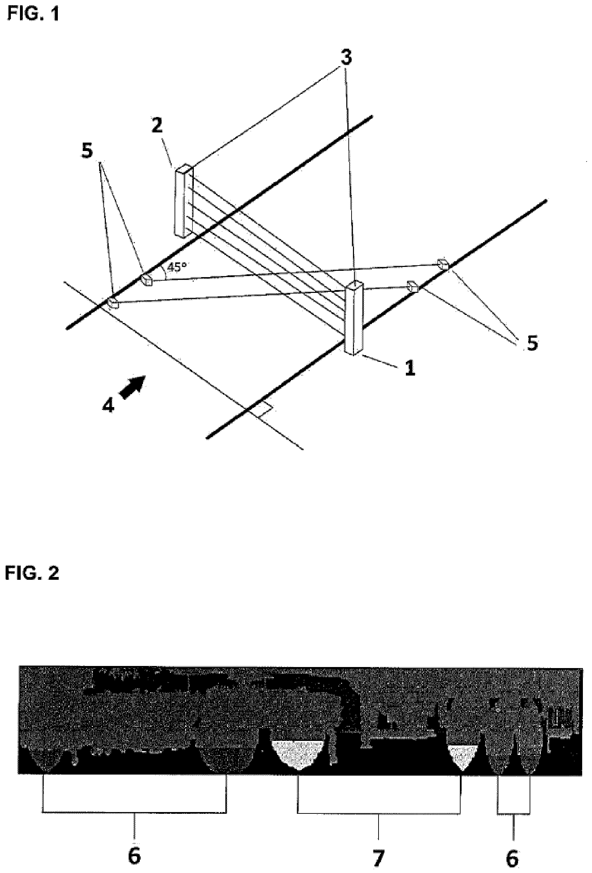

To complement the present description so to obtain better understanding of the features of the present invention and according to a preferred practical embodiment, the description is followed by an attached set of figures, in which its operation was represented as an example, but in a non-limitative way: Figure 1 is a view showing the arrangement scheme on the track of the system for automatically detecting vehicle classes by analyzing side profile images.Figure 2 discloses an image obtained by scanning by optical barrier.

### DETAILED DESCRIPTION OF THE INVENTION

In agreement with the disclosures of the above listed figures, the **"SYSTEM FOR AUTOMATIC DETECTION OF VEHICLE CLASSES BY ANALYZING A LENGTHWISE PROFILE IMAGE"** conceives an extremely efficient system for counting suspended axles and axles on the ground of a given vehicle, also performing analysis for determining the class of vehicles from their profile.

Crosswise to the toll track (4) on the track (4) level, a pair of optical barrier elements (3) will be installed with a minimum working height of 500 millimeters, containing optical beams spaced between 18 and 25 millimeters, wherein the transmitting element (1) is on one side of the track (4) and the receiving element (2) is on the other side.

Two pairs of small optical elements (5) are installed at 45 (forty-five) degrees over the track (4), also on the track (4) level, so to allow for double wheel measurement.

During the vehicle movement, each beam of the optical curtain (3) is or not occluded, according to the profile of the vehicle portion being reached by the optical beams at each moment.

As the vehicle moves on the track (4) and the vehicle low profile image is formed, detection algorithms look for tyre-shaped elements and, when they found them, they count the occurrences as the axles on the ground (6) or suspended (7).

A parallel reading process for sensor (5) occlusions at 45 (forty-five) degrees is performed while the vehicle moves and a tyre thickness measurement is performed on each axle, thus feeding the double wheel counting. The combination of data: axles on the ground (6), suspended axles (7) and double wheels establish the class of the vehicle and the fee to be collected at the toll station.

Therefore, the present description referred to a fully innovative conception presenting, as we can see from the performed analysis and figures as shown, novel constructive and functional technical characteristics.

For the benefits offered, and also for including fully innovative features fulfilling all the requirements of novelty and originality in the field, the present **"SYSTEM FOR AUTOMATIC DETECTION OF VEHICLE CLASSES BY ANALYZING A LENGTHWISE PROFILE IMAGE"** gathers the required conditions to deserve a patent of invention.

## Claims

1. **"SYSTEM FOR AUTOMATIC DETECTION OF VEHICLE CLASSES BY ANALYZING A LENGTHWISE PROFILE IMAGE",** more precisely conceives a system which main purpose is to count the axles on the floor and suspended axles of an automotive vehicle, thus determining its class for defining fees at a toll station; which is **characterized by** the installation, crosswise to the toll track (4) at the track (4) level, of a pair of optical barrier elements (3) with at least 500 millimeters, containing at least 22 (twenty-two) beams, wherein the transmitting element (1) remains on one side of the track (4) and the receiving element (1) stays on the other side; two pairs of small optical elements (2) are installed at 45 (forty-five) degrees over the track (4), also on the track (4) level, so to allow the measurement of double wheels; while the vehicle moves, each beam of the optical barrier (3) is or not occluded, according to the profile of the vehicle portion being hit by the optical beams at each moment; according to the movement of the vehicle on the track (4) and imaging of the low profile of the vehicle, detection algorithms search for tyre-shaped elements and, when these are found, the occurrences are counted as axles on the ground (5) or suspended (6); a parallel reading process for sensor occlusions at 45 (forty-five) degrees is performed while the vehicle moves and a measurement of tyre thickness is performed on each axle, thus feeding the double wheel counting; the combination of the data: axles on the ground (5), suspended axles (6) and double wheels establishes the class of the vehicle and the fee to be collected at the toll station.

2. **"SYSTEM FOR AUTOMATIC DETECTION OF VEHICLE CLASSES BY ANALYZING A LENGTHWISE PROFILE IMAGE"** of claim 1, **characterized by** the system having the secondary function of establishing the length of the vehicle, measuring its transit speed, distinguishing vehicles for cargo transportation from vehicles for public transportation of persons and detecting the existence of axles with double wheels for complementary profile analysis.
